# EUROPEAN PATENT APPLICATION

(11) **EP 4 797 017 A1**
(43) Date of publication of application: **26.08.2026**
(21) Application number: 25159215.0
(22) Date of filing: 20.02.2025
(51) Int. Cl.: G05B 19/418, G05B 13/02, G05B 23/02

(54) **A METHOD AND SYSTEM OF AUTOMATED INDUSTRIAL PROCESS OPTIMIZATION OF A CEMENT MANUFACTURING PROCESS**

(71) Applicant: Innomotics GmbH, 90441 Nürnberg (DE)
(72) Inventor: SCHOONE, Sunny, 91052 Erlangen (DE); A, Balakrishnan, 560021 Bangalore, Karnataka (IN); SZABO, László, 1022 Budapest (HU)
(74) Representative: Michalski Hüttermann & Partner mbB

(57) **Abstract**

The present invention relates to a method and system (100) for automated industrial process optimization of a cement manufacturing process based on historical operator actions. The system (100) includes sensors to monitor current parameters and a data storage unit to store historical data and operator actions. The processor (202) detects a first process disturbance by monitoring current parameters and comparing them with historical data to identify a second similar disturbance. The processor (202) determines historical operator actions preceding the second disturbance and analyzes their effectiveness in stabilizing the process. The system (100) then implements these actions to control and stabilize the current process disturbance. The method includes storing historical actions in a Digitized Database (408), training machine learning algorithms, and verifying action effectiveness. This approach ensures consistent product quality, operational efficiency, and reduced energy consumption by leveraging advanced Al models and historical data for process optimization.

## Description

The present invention relates to the field of industrial process control and automation, specifically to the automation of automated industrial process optimization in cement manufacturing.

Cement manufacturing is a complex and energy-intensive process that involves several stages, including the extraction and preparation of raw materials, clinker production in a rotary kiln, and the grinding and blending of clinker with other materials to produce cement. Each stage of the process is critical and must be carefully controlled to achieve the desired product quality and operational efficiency. Variations in key process parameters such as kiln temperature, fuel feed rate, and raw material composition can lead to process disturbances, resulting in suboptimal product quality, increased energy consumption, and higher emissions.

Traditionally, the control of the cement manufacturing process has relied heavily on the experience and intuition of operators, who manually adjust process parameters in response to observed deviations. While experienced operators can often stabilize the process effectively, this approach is not always reliable or consistent. Moreover, manual interventions can be slow, leading to prolonged periods of suboptimal operation and inefficiencies.

Recent advancements in process control technologies, including the development of Process Control Systems (PCS) and Distributed Control Systems (DCS), have enabled more automated and precise control of industrial processes. These systems utilize real-time data from advanced sensors and data acquisition systems to continuously monitor key process parameters and make adjustments as needed. However, even with these advanced control systems, the challenge remains to identify the most effective corrective actions quickly and accurately, especially in the face of complex and dynamic process disturbances.

In light of above, there exists a need for an efficient method and system for automated industrial process optimization of a cement manufacturing process
Thus it is an object of the present invention to provide a method and system for automated industrial process optimization of a cement manufacturing process
The automated industrial process optimization refers to a use of advanced algorithms and data analytics to enhance an efficiency and stability of industrial processes without the need for constant human intervention.

The cement manufacturing process involves several stages, including extraction and preparation of raw materials, heating of materials in a kiln to form clinker, and grinding of clinker with additives to produce cement. The cement manufacturing process is energy-intensive and requires precise control to maintain product quality and minimize environmental impact. Key components in the cement manufacturing process include raw material crushers, preheaters, kilns, coolers, and finish mills. Sensors and control systems are used to monitor parameters such as temperature, pressure, and chemical composition at various stages of production.

Historical operator actions refer to specific adjustments and interventions made by operators to maintain or restore optimal conditions during the cement manufacturing process in the past. Examples of historical operator actions include adjusting the kiln temperature, modifying the fuel feed rate, altering the raw material mix, and changing the speed of fans and conveyors. The Historical operator actions are typically based on an expertise and experience of the operator in handling similar process disturbances in the past.

The method comprises detecting, by a processor, a first process disturbance in the cement manufacturing process by monitoring a plurality of current parameters of the cement manufacturing process. The first process disturbance is defined as a deviation of the plurality of current parameters from one or more operational thresholds.

In one example, the first process disturbance refers to any anomaly or deviation in the cement manufacturing process that can disrupt normal operations. Examples of the first process disturbance include an unexpected drop in kiln temperature, an increase in kiln inlet pressure, a sudden spike in CO levels, or a fluctuation in the quality parameters of the cement, such as alite or free lime content.

The plurality of current parameters encompasses various measurable aspects of the cement manufacturing process for maintaining optimal operation. Examples of the plurality of current parameters include kiln temperature, kiln inlet pressure, calciner head temperature, fuel feed rate, raw material composition, ID fan speed, and CO levels. Monitoring the plurality of current parameters provides a comprehensive understanding of process conditions of the cement manufacturing process at any given time.

The monitoring is done by the processor using advanced sensors and data acquisition systems that continuously capture real-time data from a plurality of stages of the cement manufacturing process. The real-time data is then fed into a control system, such as PCS (Process Control System) or DCS (Distributed Control System), which processes information and makes the real-time data available for analysis. Examples of the real-time data comprises kiln temperature, fuel feed rate, raw material composition, kiln rotation speed, ID fan speed, CO levels, clinker cooler temperature, pressure levels, vibration data, energy consumption, and dust emissions.

The processor is further configured to detect the first process disturbance by using one or more algorithms that analyze the captured real-time data. The one or more algorithms comprises algorithms for pattern recognition, anomaly detection, and statistical process control are commonly used to identify deviations from normal operating conditions. Examples of the one or more algorithms include Principal Component Analysis (PCA) for detecting multivariate anomalies, and K-Nearest Neighbors (KNN) for pattern matching. The one or more algorithms compare the current parameters against predefined operational thresholds to detect any deviations.

For example, in the operation of a cement kiln, sensors continuously monitor parameters such as kiln temperature, kiln inlet pressure, and CO levels. The monitored parameters is processed by a PCS or DCS, which employs algorithms like PCA and KNN to detect any deviations from the optimal range. If the kiln temperature drops below a certain threshold or if CO levels spike unexpectedly, the system identifies this as a first process disturbance.

The method further comprises comparing the plurality of current parameters with historical data to determine a second process disturbance that occurred in the past. The second process disturbance exhibits a deviation from at least one operational threshold in a pattern quantitatively similar to that of the first process disturbance.

Comparing the plurality of current parameters with historical data is done using one or more algorithms designed to analyze and identify patterns in the historical data. The one or more algorithms include Dynamic Time Warping (DTW) and Euclidean Distance are commonly used to measure a similarity between time-series data of the plurality of current parameters and the historical data. DTW, for instance, aligns sequences of data points of the plurality of current parameters to find an optimal match within the historical data, even if there are shifts or distortions in time. Euclidean Distance calculates the straight-line distance between points in a multi-dimensional space, providing a measure of similarity between the plurality of current parameters and parameters in the historical data.

The second process disturbance refers to a previous event in the cement manufacturing process that exhibited anomalies or deviations resembling the first process disturbance. By recognizing the second process disturbance, the processor leverages historical corrective actions that were effective in addressing past issues, thereby informing current decision-making processes.

The at least one operational threshold represents a limit or acceptable range for a specific process parameter, beyond which the process is considered to be operating under suboptimal or unsafe conditions. For example, an operational threshold for kiln temperature may be set between 1350°C and 1450°C. Any temperature reading outside this range would indicate a deviation from the operational threshold.

The deviation from the at least one operational threshold in a pattern quantitatively similar to that of the first process disturbance means that the first process disturbance mirrors a previous deviation not only in terms of exceeding the operational limits but also in a sequence and timing of the deviations. For example, if the first process disturbance involved a gradual increase in kiln temperature from 1400°C to 1500°C over 30 minutes, and the plurality of current parameters show a similar increase pattern, this would be considered a quantitatively similar deviation.

The method comprises determining a plurality of historical operator actions that occurred within a first time period. The first time period is a first time duration immediately prior to the occurrence of the second process disturbance.

The plurality of historical operator actions refers to specific interventions and adjustments made by operators in response to process conditions during a defined timeframe. The plurality of historical operator actions maintain optimal operation and addressing any deviations from the plurality of process parameters. Examples of the plurality of historical operator actions in the cement manufacturing process include adjusting kiln temperature, modifying fuel feed rate, altering raw material mix, changing speed of fans and conveyors, and tuning settings of the preheater and cooler. The plurality of historical operator actions are typically based on operator's experience and expertise in handling similar process disturbances in the past.

The first time period refers to a specific duration immediately preceding an occurrence of the second process disturbance. The first time period captures operator actions taken just before the process deviation occurred, providing valuable insights into conditions that led up to the second process disturbance. For example, if the second process disturbance involved a sudden spike in kiln temperature, the first time period would encompass minutes or hours leading up to the spike, during which operators may have made various adjustments to try to stabilize the temperature.

The method comprises analyzing the historical data to determine whether the cement manufacturing process was stabilized within a second time period. The second time period is a second time duration immediately following the occurrence of the second process disturbance.

In other words, the processor is further configured to determine whether the cement manufacturing process was stabilized within the second time period. Stabilization indicates that the plurality of process parameters returned to optimal ranges after operator interventions, ensuring that the cement manufacturing process continued efficiently and without further deviations. By analyzing a stabilization period, the processor is configured to identify which operator actions were successful in mitigating a disturbance and maintaining process stability.

The second time period refers to a specific duration immediately following the occurrence of the second process disturbance. The second time period captures a period during which the effects of operator interventions can be observed. For example, if the second process disturbance involved a spike in kiln temperature, the second time period would encompass minutes or hours following the spike, during which the temperature would ideally return to its optimal range as a result of the operator actions.

The method comprises controlling the cement manufacturing process by implementing the plurality of historical operator actions based on the determination that the cement manufacturing process was stabilized within the second time period. Thus, the cement manufacturing process is stabilized from the first process disturbance.

A determination that the cement manufacturing process was stabilized within the second time period verifies an effectiveness of the plurality of historical operator actions. When the historical data confirms a the plurality of process parameters returned to optimal ranges following operator interventions, it provides evidence that the plurality of historical operator actions successfully mitigated the second process disturbance in the past. Thus, the processor is configured to select and implement the plurality of historical operator actions which are proven corrective actions with confidence, ensuring that similar disturbances can be effectively managed.

Implementation of the plurality of historical operator actions is essential for stabilizing the cement manufacturing process from the first process disturbance. By applying the same successful interventions that were used to stabilize the second process disturbance in the past, the processor leverages proven strategies to address the first process disturbance. Thus, corrective actions are not based on trial and error but are informed by historical success, leading to more reliable and efficient stabilization.

The method further comprises determining that the plurality of historical operator actions are misaligned with one or more criteria. The one or more criteria refer to specific guidelines or performance benchmarks that define optimal operational conditions and acceptable ranges for a plurality of process parameters of the cement manufacturing process. The one or more criteria are used to evaluate whether the plurality of historical operator actions are appropriate for current conditions. Examples of the one or more criteria in the cement manufacturing process include maintaining kiln temperature within a specified range, ensuring fuel efficiency, minimizing emissions, and achieving desired product quality metrics such as cement fineness and composition.

In one example, the one or more criteria are often defined by a user through one or more prioritization tables. The one or more prioritization tables allow users to rank an importance of different process parameters and desired outcomes based on one or more operational goals and one or more regulatory requirements of the cement manufacturing process. For instance, a prioritization table may rank kiln temperature control as highest priority, followed by fuel efficiency and emission reduction.

Misaligned with one or more criteria means that the historical operator actions do not meet the defined benchmarks or guidelines. If the plurality of historical operation actions taken by operators in the past are not suitable for a current process condition or fail to achieve one or more desired outcomes, they are considered misaligned. For example, if a current operational goal is to reduce CO emissions, but the plurality of historical operator actions led to an increase in emissions, the plurality of historical operator actions are deemed misaligned with the criteria.

Determining that the plurality of historical operator actions are misaligned involves comparing the outcomes of the plurality of historical operator actions against the one or more criteria. Advanced algorithms and data analytics tools are used to assess whether the plurality of historical operator actions meet the one or more criteria. For example, if the prioritization table emphasizes fuel efficiency, the algorithm will evaluate whether the historical actions improved or compromised fuel efficiency during past disturbances.

The processor is configured to use data analytics tools to compare the outcomes of the plurality of historical operator actions against the one or more criteria defined in the prioritization table. If analysis shows that the plurality of historical operator actions do not meet the one or more criteria, the processor is configured to determines that the plurality of historical operator actions are misaligned. For instance, if an increase in fuel feed rate stabilized the temperature but resulted in fuel inefficiency, the processor is configured to identify.

The method comprises stopping an implementation of the plurality of historical operator actions based on the determination that the plurality of historical operator actions are misaligned. Stopping the implementation of the plurality of historical operator actions is done when the plurality of historical operator actions are found to be misaligned with one or more criteria. Implementing misaligned actions may exacerbate the first process disturbance, lead to inefficient operation, or fail to achieve one or more outcomes. For example, in the cement manufacturing process, if historical operator actions intended to stabilize kiln temperature result in excessive fuel consumption, continuing with the plurality of historical operator actions would compromise fuel efficiency and increase operational costs. Therefore, it is necessary to halt the implementation of such actions to prevent further negative impacts on the cement manufacturing process.

Stopping the implementation of the plurality of historical operator actions is achieved through the control systems integrated into the cement manufacturing process. Advanced process control systems (PCS) and distributed control systems (DCS) are equipped with one or more algorithms that continuously evaluate an effectiveness of the implemented actions. When the processor determines that the plurality of historical operator actions are misaligned with the defined criteria, the processor is configured to send commands to override or halt the ongoing interventions.

The method further comprises storing the plurality of historical operator actions and corresponding process parameters in a digitized database. The method further comprises training one or more machine learning algorithms with the plurality of current parameters and the plurality of historical operator actions.

Storing the plurality of historical operator actions and corresponding process parameters in a digitized database is essential for preserving valuable operational knowledge and enabling advanced data analysis. The digitized database allows for a systematic recording and retrieval of historical data, ensuring that past experiences and actions are readily available for future reference. Examples of digitized databases include SQL databases like MySQL and PostgreSQL, NoSQL databases like MongoDB, and specialized industrial databases like OSlsoft PI System. These databases provide robust storage solutions that can handle large volumes of time-series data and enable efficient querying and analysis.

Training one or more machine learning algorithms with the plurality of current parameters and the plurality of historical operator actions is for developing predictive models and automated decision-making systems. Machine learning algorithms learn from historical data to identify patterns, correlations, and causal relationships, enabling the machine learning algorithms to make accurate predictions and recommendations for future actions. Examples of training processes include supervised learning, where the algorithm is trained on labeled data consisting of input-output pairs, and unsupervised learning, where the algorithm identifies patterns and clusters in unlabeled data.

In the context of the cement manufacturing process, sensors and control systems continuously monitor parameters such as kiln temperature, fuel feed rate, and CO levels. The historical operator actions, such as adjusting the fuel feed rate or changing the raw material mix, along with the corresponding process parameters, are stored in a digitized database like the OSlsoft PI System. This database records the data in a structured format, allowing for efficient storage and retrieval.

Training the machine learning algorithms involves feeding them the plurality of current parameters and the plurality of historical operator actions stored in the digitized database. The training process aims to develop models that can predict process disturbances and recommend effective corrective actions based on historical data. For example, a supervised learning algorithm like Random Forest can be trained on historical data where the input features are the current parameters (e.g., kiln temperature, CO levels) and the output labels are the operator actions (e.g., reducing fuel feed rate). The algorithm learns the relationship between the process parameters and the effective operator actions.

The machine learning algorithms are trained to identify patterns and make predictions for stabilizing the cement manufacturing process. For example, if the current kiln temperature pattern matches a historical pattern that led to a disturbance, the trained algorithm can recommend actions such as adjusting the fuel feed rate or modifying the raw material mix to prevent the disturbance. By leveraging the trained models, the control system can automate the decision-making process, ensuring timely and effective interventions to maintain process stability.

The method comprises verifying an effectiveness of the plurality of implemented historical operator actions by monitoring a stability of the cement manufacturing process.

Verifying the effectiveness of the plurality of implemented historical operator actions causes the interventions applied for the first process disturbance to achieve a desired outcomes. The verification process involves continuous monitoring of the plurality of process parameters to assess whether the implemented actions have successfully stabilized the cement manufacturing process. By evaluating an impact of the historical operator actions, the processor ensures that only effective strategies are employed, thereby enhancing process reliability and efficiency.

In the context of the cement manufacturing process, suppose a disturbance is identified, and historical operator actions such as reducing the fuel feed rate and adjusting the raw material mix are implemented. The control system continuously monitors the kiln temperature, which is a critical parameter for process stability. The system collects real-time data from temperature sensors installed in the kiln and compares the current readings to the desired temperature range defined in the operational thresholds.

The verification process involves analyzing the monitored data to determine whether the kiln temperature has returned to the optimal range and remains stable. For example, if the kiln temperature was initially 1500°C and the desired range is 1350°C to 1450°C, the control system tracks the temperature trend following the implementation of the historical operator actions. If the temperature gradually decreases and stabilizes within the optimal range, the effectiveness of the actions is confirmed.

In alternative embodiments the processor is configured to further refine and automate the cement manufacturing process. In one example, data collection and input are specifically configured to collect both real-time and historical process parameters, feeding them into advanced databases such as InfluxDB. The processor further performs historical data digitization can involve actively recording past operator actions and decisions, including detailed timestamps and records, ensuring comprehensive documentation. The processor is further configured to store successful optimizations in a T+30 database ensuring that effective strategies are preserved for future use. Trust verification and the use of a parameter range table ensure recommendations are reliable by cross-referencing with historical data and maintaining optimization within acceptable limits. Detailed user-configurable tables allow user to set priorities and deviation limits for parameters, customizing optimization strategy to specific goals. A robust data comparison mechanism ensures accurate identification of similar situations by comparing current data with historical records.

The object of the present invention is provided by a system for automated industrial process optimization of a cement manufacturing process, comprising one or more sensors configured to monitor a plurality of current parameters of the cement manufacturing process; a data storage unit configured to store historical data and historical operator actions; and a processor configured to detect a first process disturbance in the cement manufacturing process by monitoring the plurality of current parameters, wherein the first process disturbance is a deviation of the plurality of current parameters from one or more operational thresholds. The processor is further configured to compare the plurality of current parameters with historical data to determine a second process disturbance that occurred in the past, wherein the second process disturbance exhibits a deviation from at least one operational threshold in a pattern quantitatively similar to that of the first process disturbance. The processor determines a plurality of historical operator actions that occurred within a first time period, wherein the first time period is a first time duration immediately prior to the occurrence of the second process disturbance. The processor analyzes the historical data to determine whether the cement manufacturing process was stabilized within a second time period, wherein the second time period is a second time duration immediately following the occurrence of the second process disturbance. The processor controls the cement manufacturing process by implementing the plurality of historical operator actions based on the determination that the cement manufacturing process was stabilized within the second time period, thereby stabilizing the cement manufacturing process from the first process disturbance.

In one embodiment, the processing unit is further configured to determine that the plurality of historical operator actions are misaligned with one or more criteria, and to stop the implementation of the plurality of historical operator actions based on the determination that the plurality of historical operator actions are misaligned.

In another embodiment, the processing unit is further configured to compare the plurality of current parameters against historical data within a user-defined deviation range of parameters.

In yet another embodiment, the processing unit is further configured to detect the first process disturbance based on a pattern similarity match between the plurality of current parameters and the historical data exceeding a certain threshold.

Additionally, the processor is further configured to store the plurality of historical operator actions and corresponding process parameters in a digitized database.

Moreover, the processing unit is further configured to train one or more machine learning algorithms with the plurality of current parameters and the plurality of historical operator actions.

The processing unit is also configured to verify the effectiveness of the plurality of implemented historical operator actions by monitoring the stability of the cement manufacturing process.

The object of the present invention is provided by a computer-program product, having machine-readable instructions stored therein, that when executed by a processor, cause the processor to perform a method according to any of the aforementioned claims.

The present invention is further described hereinafter with reference to illustrated embodiments shown in the accompanying drawings, in which the features of the individual objects claimed or described can readily be combined with one another. Hereinafter, the invention is illustrated and explained in more detail by way of example with reference to the figures. The features shown in the figures can be combined by a person skilled in the art to form new embodiments without departing from the scope of the invention. Elements of the same type are given the same reference character. It is shown in:
FIG. 1: is a block diagram of a system for automated industrial process optimization of a cement manufacturing process, in which an embodiment of the present invention can be implemented.
FIG. 2 is a block diagram of a control system, in which an embodiment of the present invention can be implemented.
FIG. 3 is a process flowchart illustrating an exemplary method of automated industrial process optimization of a cement manufacturing process, according to an embodiment of the present invention. and
FIG. 4 is a process flowchart illustrating an exemplary use case of automated industrial process optimization of a cement manufacturing process, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

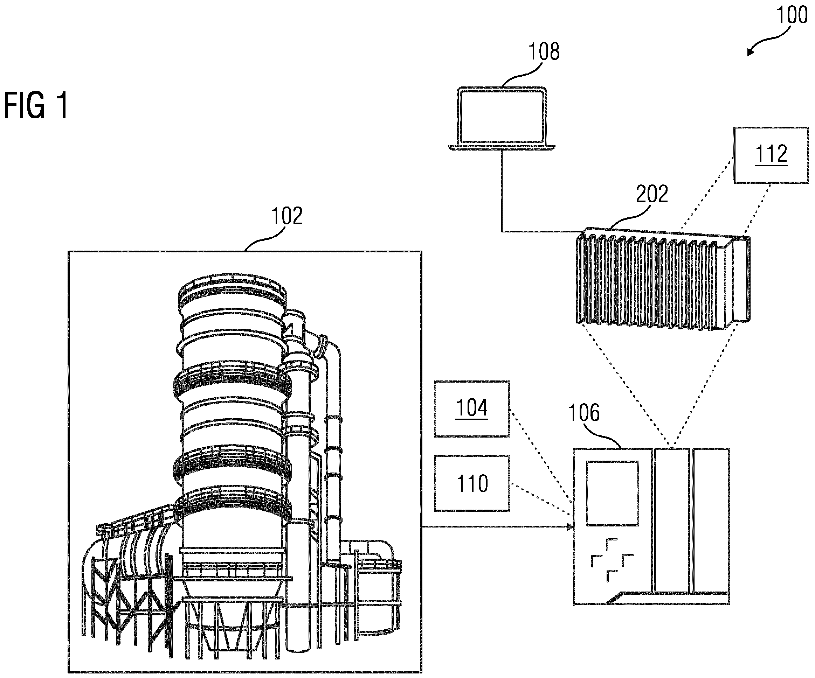

FIG. 1: is a block diagram of a system 100 for automated industrial process optimization of a cement manufacturing process, according to an embodiment of the present invention. In FIG 1, the system 100 includes one or more sensors 104, a control system 106, and a human machine interface 108. The control system 106 comprises a processor 202 such as a programmable logic controller. The processor 202 comprises an automation module 112 which is configured to automatically optimize the fuel consumption in the cement kiln 102.

The cement kiln 102 is a large, cylindrical vessel which is used during a pyroprocessing stage of cement production. Inside the cement manufacturing kiln 102, a plurality of raw materials are pyroprocessed to generate clinker. Examples of the plurality of raw materials include limestone, clay, or shale. The pyroprocessing happens at very high temperatures and is thus fuel-intensive. Examples of fuel consumed includes coal, natural gas, and oil. The fuel consumed by the cement manufacturing kiln is expensive, and thus by optimizing fuel consumption, return of interest can be optimized. Furthermore, a temperature of the cement manufacturing kiln is dependent on the fuel consumption of the cement manufacturing kiln. A stability of the cement manufacturing kiln is dependent on the temperature. Thus, by optimizing the fuel consumption, a stability of the cement manufacturing kiln can be maintained, and furthermore, a return of investment of the cement manufacturing kiln can be optimized.

The outputs of the cement manufacturing kiln 102 are primarily the clinker and waste gases. A quality and one or more properties of clinker has a significant impact on a final strength and a quality of cement produced by the cement manufacturing plant. Since the quality of clinker is proportional to a stability of the cement manufacturing kiln, optimizing the fuel consumption becomes of paramount importance.

The one or more sensors 104 are configured to capture a plurality of operational parameters from the cement manufacturing kiln 102.

The control system 106 is configured to coordinate and optimize one or more stages of cement production. The control system 106 is configured to process inputs from the one or more sensors 104 to manage activities such as precise mixing of raw materials, control of kiln temperature for clinker production, and timing of cooling processes to ensure quality of the final cement.

The human machine interface (HMI) 108 is configured to enable operators to interact directly with the control system 106. Operators can use HMI panels to monitor process variables like kiln temperature and motor speeds, adjust operational parameters, and troubleshoot issues from a centralized location. For instance, the HMI 108 is configured to display diagnostics from the cement kiln 102, to allow operators to make immediate adjustments or shutdowns to prevent damage or inefficiencies in the cement manufacturing kiln.

The processor 202, is typically a Programmable Logic Controller (PLC), which is crucial for executing complex control algorithms. In cement production, the PLC can automate repetitive tasks such as the sequential operation of valves for loading and unloading materials or the regulation of the grinding and baking processes. The processor 202 is further configured to analyze data captured by the one or more sensors 104.

The Carbon Monoxide (CO) probe 110 is a sensor specifically designed to measure a concentration of carbon monoxide in the cement kiln 102. The Carbon Monoxide probe 110 plays a role in monitoring and controlling a combustion process within the cement kiln 102.

The automation Module 112 comprises software code which, when executed by the processor 202, causes the processor 202 to early detect blockage of the carbon monoxide probe 110.

The automation module 112 incorporates software that, when executed by the processing unit 202, monitor a kiln inlet oxygen level and a kiln inlet nitrogen oxide level. For instance, the automation module 112 is configured to continuously analyze data from the one or more sensors 104 to monitor oxygen, nitrogen oxide, and carbon monoxide.

The automated industrial process optimization refers to a use of advanced algorithms and data analytics to enhance an efficiency and stability of industrial processes without the need for constant human intervention. The cement manufacturing process involves several stages, including extraction and preparation of raw materials, heating of materials in the cement kiln 102 to form clinker, and grinding of clinker with additives to produce cement. The cement manufacturing process is energy-intensive and requires precise control to maintain product quality and minimize environmental impact. Key components in the cement manufacturing process include raw material crushers, preheaters, the cement kiln 102, coolers, and finish mills. The one or more sensors 104 and control systems 106 are used to monitor parameters such as temperature, pressure, and chemical composition at various stages of production.

Historical operator actions refer to specific adjustments and interventions made by operators to maintain or restore optimal conditions during the cement manufacturing process in the past. Examples of historical operator actions include adjusting the cement kiln 102 temperature, modifying fuel feed rate, altering raw material mix, and changing speed of fans and conveyors. Operator actions are typically based on an expertise and experience of the operator in handling similar process disturbances in the past.

The automation module 112 is configured to cause the processor 202 to detect a first process disturbance in the cement manufacturing process by monitoring a plurality of current parameters of the cement manufacturing process. The first process disturbance is defined as a deviation of the plurality of current parameters from one or more operational thresholds.

In one example, the first process disturbance refers to an anomaly or deviation in the cement manufacturing process that can disrupt normal operations. Examples of the first process disturbance include an unexpected drop in kiln temperature, an increase in kiln inlet pressure, a sudden spike in CO levels, or a fluctuation in the quality parameters of the cement, such as alite or free lime content.

The plurality of current parameters encompasses various measurable aspects of the cement manufacturing process for maintaining optimal operation. Examples of the plurality of current parameters include kiln temperature, kiln inlet pressure, calciner head temperature, fuel feed rate, raw material composition, ID fan speed, and CO levels. Monitoring the plurality of current parameters provides a comprehensive understanding of process conditions of the cement manufacturing process at any given time.

The processor is configured to monitor the plurality of current parameters by using the one or more sensors 104 and data acquisition systems that continuously capture real-time data from a plurality of stages of the cement manufacturing process. The real-time data is then fed into the control system 106, such as PCS (Process Control System) or DCS (Distributed Control System), which processes information and makes the real-time data available for analysis. Examples of the real-time data comprise kiln temperature, fuel feed rate, raw material composition, kiln 102 rotation speed, ID fan speed, CO levels, clinker cooler temperature, pressure levels, vibration data, energy consumption, and dust emissions.

The automation module 112 is configured to cause the processor 202 to detect the first process disturbance by using one or more algorithms that analyze the captured real-time data. The one or more algorithms comprise algorithms for pattern recognition, anomaly detection, and statistical process control, commonly used to identify deviations from normal operating conditions. Examples of the one or more algorithms include Principal Component Analysis (PCA) for detecting multivariate anomalies, and K-Nearest Neighbors (KNN) for pattern matching. The one or more algorithms compare the current parameters against predefined operational thresholds to detect any deviations.

For example, in the operation of the cement kiln 102, the one or more sensors 104 continuously monitor the plurality of current parameters such as kiln temperature, kiln inlet pressure, and CO levels. The monitored plurality of current parameters are processed by a PCS or DCS, which employs algorithms like PCA and KNN to detect any deviations from the one or more operational thresholds. If the kiln 102 temperature drops below a certain threshold or if CO levels spike unexpectedly, the system identifies this as a first process disturbance.

The one or more operational thresholds represent specific limits or acceptable ranges for various current parameters that ensure the cement kiln 102 operates under optimal or safe conditions. The one or more operational thresholds are set based on empirical data, industry standards, and regulatory requirements. For instance, an operational threshold for kiln temperature might be set between 1350°C and 1450°C, ensuring the temperature remains within a range that supports efficient clinker formation while minimizing fuel consumption and emissions.

The one or more operational thresholds are received by the control system 106 through preconfigured settings or real-time updates from a central database. Operators or engineers input the one or more operational thresholds into the control system 106 based on historical data, expert knowledge, and compliance with environmental regulations. Data dimensions of the operational thresholds encompass various aspects such as time, temperature, pressure, and concentration levels, providing a comprehensive framework for process monitoring.

For example, an operational threshold for CO levels in the cement kiln 102 might be set at a maximum concentration of 50 ppm (parts per million). This threshold ensures that the combustion process within the kiln 102 is efficient and minimizes the release of harmful gases. The one or more sensors 104 continuously monitor the CO levels and relay the data to the PCS or DCS. If the CO concentration exceeds the 50 ppm threshold, the system identifies this as a first process disturbance, triggering corrective actions to bring the levels back within the acceptable range.

The automation module 112 is configured to cause the processor 202 to compare the plurality of current parameters with historical data to determine a second process disturbance that occurred in the past. The second process disturbance exhibits a deviation from at least one operational threshold in a pattern quantitatively similar to that of the first process disturbance.

Comparing the plurality of current parameters with historical data is done using one or more algorithms designed to analyze and identify patterns in the historical data. The historical data comprises a plurality of process parameter recorded in the past. The one or more algorithms include Dynamic Time Warping (DTW) and Euclidean Distance, commonly used to measure a similarity between time-series data of the plurality of current parameters and the plurality of process parameters of the historical data. DTW, for instance, aligns sequences of data points of the plurality of current parameters to find an optimal match within the historical data, even if there are shifts or distortions in time. Euclidean Distance calculates the straight-line distance between points in a multi-dimensional space, providing a measure of similarity between the plurality of current parameters and parameters in the historical data.

The second process disturbance refers to a previous event in the cement manufacturing process that exhibited anomalies or deviations resembling the first process disturbance. By identifying the second process disturbance, the processor 202 leverages historical corrective actions that were effective in addressing past issues, thereby informing current decision-making processes.

The at least one operational threshold represents a limit or acceptable range for a specific process parameter of the plurality of process parameters, beyond which the cement manufacturing process is operating under suboptimal or unsafe conditions. For example, an operational threshold for kiln 102 temperature may be set between 1350°C and 1450°C. Any temperature reading outside this range would indicate a deviation from the operational threshold.

The deviation from the at least one operational threshold in the pattern quantitatively similar to that of the first process disturbance means that the first process disturbance mirrors a the second process disturbance not only in terms of exceeding the at least one operational threshold but also in a sequence and timing of the deviations. For example, if the first process disturbance involved a gradual increase in kiln 102 temperature from 1400°C to 1500°C over 30 minutes, and the plurality of process parameters show a similar increase pattern, the processor 202 can determine a similarity in deviation using an Al model. Types of the Al model includes deep learning models, recurrent neural networks (RNNs), and convolutional neural networks (CNNs). Specific names of the Al model that can be employed include, but is not limited to Long Short-Term Memory (LSTM) networks and Temporal Convolutional Networks (TCNs).

Input variables for the Al model include the plurality of current parameters and the plurality of process parameters in the historical data, such as kiln temperature, kiln inlet pressure, calciner head temperature, fuel feed rate, raw material composition, ID fan speed, and CO levels. Output variables of the Al model consist of similarity scores or classifications that indicate how closely the plurality of current parameters match historical patterns of the plurality of process parameters. For instance, an LSTM network can be trained on historical time-series data to predict the likelihood of a current pattern being similar to a past disturbance pattern.

The processor 202 is configured to process the output variables by evaluating the similarity score provided by the Al model. If the similarity score exceeds a predefined threshold, the processor 202 determines that the first process disturbance's pattern is quantitatively similar to a pattern o the second process disturbance. In one example, the similarity score is determined as a percentage and the predefined threshold is 90%. The processor 202 then uses this determination to identify and implement effective historical operator actions to stabilize the cement manufacturing process. By leveraging the Al model's output, the processor 202 ensures that corrective actions are based on accurate pattern recognition, leading to reliable process optimization.

The automation module 112 is configured to cause the processor 202 to determine a plurality of historical operator actions that occurred within a first time period. The first time period is a first time duration immediately prior to the occurrence of the second process disturbance.

The plurality of historical operator actions refers to specific interventions and adjustments made by operators in response to process conditions during the first time period. The plurality of historical operator actions maintain optimal operation and addressing any deviations from the plurality of process parameters. Examples of the plurality of historical operator actions in the cement manufacturing process include adjusting kiln 102 temperature, modifying fuel feed rate, altering raw material mix, changing speed of fans and conveyors, and tuning settings of the preheater and cooler. The plurality of historical operator actions are typically based on operator's experience and expertise in handling similar process disturbances in the past.

The first time period refers to a specific duration immediately preceding an occurrence of the second process disturbance. The first time period captures operator actions taken just before the process deviation occurred, providing valuable insights into conditions that led up to the second process disturbance. For example, if the second process disturbance involved a sudden spike in kiln temperature, the first time period would encompass minutes or hours leading up to the spike, during which operators may have made various adjustments to try to stabilize temperature before the spike occured.

The automation module 112 is configured to cause the processor 202 to analyze the historical data to determine whether the cement manufacturing process was stabilized within a second time period. The second time period is a second time duration immediately following the occurrence of the second process disturbance.

Stabilization indicates that the plurality of process parameters returned to optimal ranges after operator interventions, ensuring that the cement manufacturing process continued efficiently and without further deviations. By analyzing a stabilization period, the processor 202 is configured to determine which operator actions were successful in mitigating a disturbance and maintaining process stability.

The second time period refers to a specific duration immediately following an occurrence of the second process disturbance. The second time period captures a period during which effects of operator interventions can be observed. For example, if the second process disturbance involved a spike in kiln temperature, the second time period would encompass minutes or hours following the spike, during which the temperature would ideally return to its optimal range as a result of the operator actions.

The automation module 112 is configured to cause the processor 202 to control the cement manufacturing process by implementing the plurality of historical operator actions based on the determination that the cement manufacturing process was stabilized within the second time period. Thus, the cement manufacturing process is stabilized from the first process disturbance.

A determination that the cement manufacturing process was stabilized within the second time period verifies an effectiveness of the plurality of historical operator actions. When the historical data confirms that the plurality of process parameters returned to optimal ranges following operator interventions, it provides evidence that the plurality of historical operator actions successfully mitigated the second process disturbance in the past. Thus, the processor 202 selects and implements the plurality of historical operator actions which are proven corrective actions with confidence, ensuring that similar disturbances can be effectively managed.

Implementation of the plurality of historical operator actions is essential for stabilizing the cement manufacturing process from the first process disturbance. By applying the same successful interventions that were used to stabilize the second process disturbance in the past, the processor 202 leverages proven strategies to address the first process disturbance. Thus, corrective actions are not based on trial and error but are informed by historical success, leading to more reliable and efficient stabilization.

The automation module 112 is configured to cause the processor 202 to determine that the plurality of historical operator actions are misaligned with one or more criteria. The one or more criteria refer to specific guidelines or performance benchmarks that define optimal operational conditions and acceptable ranges for a plurality of process parameters of the cement manufacturing process. The one or more criteria are used to evaluate whether the plurality of historical operator actions are appropriate for current conditions. Examples of the one or more criteria in the cement manufacturing process include maintaining kiln temperature within a specified range, ensuring fuel efficiency, minimizing emissions, and achieving desired product quality metrics such as cement fineness and composition.

In one example, the one or more criteria are often defined by a user through one or more prioritization tables. The one or more prioritization tables allow users to rank an importance of different process parameters and desired outcomes based on one or more operational goals and one or more regulatory requirements of the cement manufacturing process. For instance, a prioritization table may rank kiln temperature control as highest priority, followed by fuel efficiency and emission reduction.

Misaligned with one or more criteria means that the plurality of historical operator actions do not meet defined benchmarks or guidelines. If the plurality of historical operation actions taken by operators in the past are not suitable for a current process condition or fail to achieve one or more desired outcomes, they are considered misaligned. For example, if a current operational goal is to reduce CO emissions, but the plurality of historical operator actions led to an increase in emissions, the plurality of historical operator actions are deemed misaligned with the criteria.

Determining that the plurality of historical operator actions are misaligned involves comparing the outcomes of the plurality of historical operator actions against the one or more criteria. Advanced algorithms and data analytics tools are used to assess whether the plurality of historical operator actions meet the one or more criteria. For example, if the prioritization table emphasizes fuel efficiency, the algorithm will evaluate whether the historical actions improved or compromised fuel efficiency during past disturbances.

The processor 202 is configured to use data analytics tools to compare outcomes of the plurality of historical operator actions against the one or more criteria defined in the prioritization table. If analysis shows that the plurality of historical operator actions do not meet the one or more criteria, the processor 202 determines that the plurality of historical operator actions are misaligned. For instance, if an increase in fuel feed rate stabilized the temperature but resulted in fuel inefficiency, the processor 202 identifies.

The automation module 112 is configured to cause the processor 202 to stop an implementation of the plurality of historical operator actions based on the determination that the plurality of historical operator actions are misaligned. Stopping the implementation of the plurality of historical operator actions is done when the plurality of historical operator actions are found to be misaligned with one or more criteria. Implementing misaligned actions may exacerbate the first process disturbance, lead to inefficient operation, or fail to achieve one or more outcomes. For example, in the cement manufacturing process, if the plurality of historical operator actions intended to stabilize kiln 102 temperature result in excessive fuel consumption, continuing with the plurality of historical operator actions would compromise fuel efficiency and increase operational costs. Therefore, it is necessary to halt the implementation of such actions to prevent further negative impacts on the cement manufacturing process.

Stopping the implementation of the plurality of historical operator actions is achieved through the control systems 106 integrated into the cement manufacturing process. Advanced process control systems (PCS) and distributed control systems (DCS) are equipped with one or more algorithms that continuously evaluate an effectiveness of the implemented actions. When the processor 202 determines that the plurality of historical operator actions are misaligned with the defined criteria, the processor 202 is configured to send commands to override or halt the ongoing interventions.

The automation module 112 is configured to cause the processor 202 to store the plurality of historical operator actions and corresponding process parameters in a digitized database. The automation module 112 is configured to cause the processor 202 to train one or more machine learning algorithms with the plurality of current parameters and the plurality of historical operator actions.

Storing the plurality of historical operator actions and corresponding process parameters in a digitized database is essential for preserving valuable operational knowledge and enabling advanced data analysis. The digitized database allows for a systematic recording and retrieval of historical data, ensuring that past experiences and actions are readily available for future reference. Examples of digitized databases include SQL databases like MySQL and PostgreSQL, NoSQL databases like MongoDB, and specialized industrial databases like OSlsoft PI System. The digitized databases provide robust storage solutions that can handle large volumes of time-series data and enable efficient querying and analysis.

In the context of the cement manufacturing process, sensors 104 and control systems 106 continuously monitor parameters such as kiln 102 temperature, fuel feed rate, and CO levels. The plurality of historical operator actions, such as adjusting fuel feed rate or changing raw material mix, along with corresponding process parameters, are stored in the digitized database like the OSlsoft PI System. This database records the data in a structured format, allowing for efficient storage and retrieval.

The processor is further configured to train one or more machine learning algorithms with the plurality of current parameters and the plurality of historical operator actions for developing predictive models and automated decision-making systems. Machine learning algorithms learn from the historical data to identify patterns, correlations, and causal relationships, enabling the one or more machine learning algorithms to make accurate predictions and recommendations for future actions. Examples of training processes include supervised learning, where the algorithm is trained on labeled data consisting of input-output pairs, and unsupervised learning, where the algorithm identifies patterns and clusters in unlabeled data.

Training the one or more machine learning algorithms uses the plurality of current parameters and the plurality of historical operator actions stored in the digitized database. A training process aims to develop models that is enabled to predict process disturbances and recommend effective corrective actions based on the historical data. For example, a supervised learning algorithm like Random Forest can be trained on historical data where the input features are the current parameters (e.g., kiln temperature, CO levels) and the output labels are the operator actions (e.g., reducing fuel feed rate). The algorithm learns the relationship between the process parameters and the effective operator actions.

The one or more machine learning algorithms are trained to identify patterns and make predictions for stabilizing the cement manufacturing process. For example, if the kiln temperature pattern matches a historical pattern that led to a disturbance, the trained algorithm can recommend actions such as adjusting the fuel feed rate or modifying the raw material mix to prevent the disturbance. By leveraging the trained models, the control system 106 can automate the decision-making process, ensuring timely and effective interventions to maintain process stability.

The automation module 112 is configured to cause the processor 202 to verify an effectiveness of the plurality of implemented historical operator actions by monitoring a stability of the cement manufacturing process.

The verification process involves analyzing the monitored data to determine whether a kiln temperature has returned to the optimal range and remains stable. For example, if the kiln temperature was initially 1500°C and the desired range is 1350°C to 1450°C, the control system 106 tracks a temperature trend following the implementation of the plurality of historical operator actions. If the temperature gradually decreases and stabilizes within the optimal range, the effectiveness of the plurality of historical operator actions is confirmed.

In alternative embodiments, the processor 202 is configured to further refine and automate the cement manufacturing process. In one example, data collection and input are specifically configured to collect both real-time and historical process parameters, and storing the collected data into advanced databases such as InfluxDB. The processor 202 further performs historical data digitization by actively recording past operator actions and decisions, including detailed timestamps and records, ensuring comprehensive documentation. The processor 202 is further configured to store successful optimizations in a T+30 database, ensuring that effective strategies are preserved for future use. Trust verification and the use of a parameter range table ensure recommendations are reliable by cross-referencing with historical data and maintaining optimization within acceptable limits. Detailed user-configurable tables allow users to set priorities and deviation limits for parameters, customizing optimization strategies to specific goals. A robust data comparison mechanism ensures accurate identification of similar situations by comparing current data with historical records.

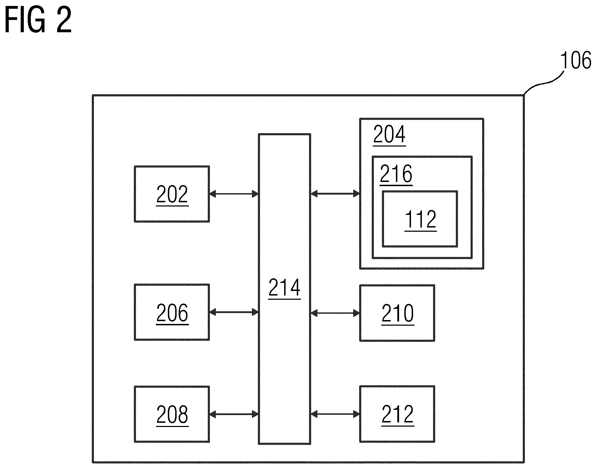

FIG. 2 is a block diagram of a control system 106, in which an embodiment of the present invention can be implemented. In FIG 2, the control system 106 includes a processor(s) 202, an accessible memory 204, a storage unit 206, a communication interface 208, an input-output unit 210, a network interface 212 and a bus 214.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processor(s) 202.

The storage unit 206 may be a non-transitory storage medium configured for storing a database which comprises server version of the plurality of programming blocks associated with the set of industrial domains.

The communication interface 208 is configured for establishing communication sessions between the cement kiln 102 and the control system 106. The communication interface 208 allows one or more control applications running on the HMI 108 to import/export project files into the control system 106. In an embodiment, the communication interface 208 interacts with the interface at the HMI 108 for allowing one or more plant operators to control the cement manufacturing kiln 102.

The input-output unit 210 may include input devices a keypad, touch-sensitive display, camera (such as a camera receiving gesture-based inputs), etc. capable of receiving one or more input signals, such as user commands to control the plurality of operational parameters. Also, the input-output unit 210 may be a display unit for displaying a graphical user interface which visualizes the plurality of operational parameters. The bus 214 acts as interconnect between the processor 202, the memory 204, and the input-output unit 210.

The network interface 212 may be configured to handle network connectivity, bandwidth and network traffic between the control system 106, the HMI 108, the one or more sensors 104 and the cement kiln 102.

Those of ordinary skilled in the art will appreciate that the hardware depicted in FIG 2 may vary for particular implementations.

For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of the control system 106 as is unique to the present disclosure or necessary for an understanding of the present disclosure is depicted and described.

The remainder of the construction and operation of the control system 106 may conform to any of the various current implementation and practices known in the art.

Those of ordinary skilled in the art will appreciate that the hardware depicted in FIG 2 may vary for particular implementations.

For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of the control system 106 as is unique to the present disclosure or necessary for an understanding of the present disclosure is depicted and described. The remainder of the construction and operation of the control system 106 may conform to any of the various current implementation and practices known in the art.

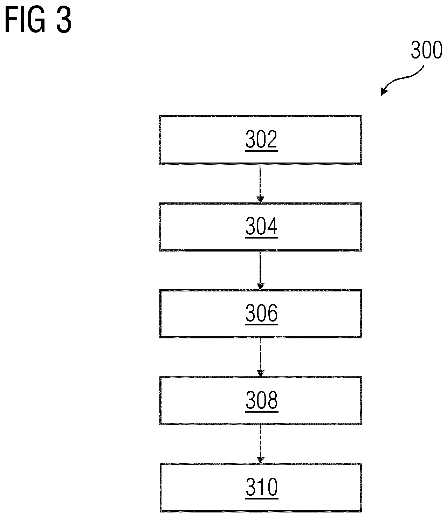

FIG. 3 is a process flowchart (300) illustrating an exemplary method of automated industrial process optimization of a cement manufacturing process, according to an embodiment of the present invention. FIG. 3 is explained in conjunction with FIG. 1 and FIG. 2.

**Step 302:** At step 302, a first process disturbance in the cement manufacturing process is detected by monitoring a plurality of current parameters of the cement manufacturing process. The first process disturbance is identified as a deviation of the plurality of current parameters from one or more operational thresholds.

**Step 304:** At step 304, the plurality of current parameters is compared with historical data to determine a second process disturbance that occurred in the past. The second process disturbance exhibits a deviation from at least one operational threshold. The deviation is in a pattern quantitatively similar to the deviation of the first process disturbance.

**Step 306:** At step 306, a plurality of historical operator actions that occurred within a first time period is determined. The first time period is a first time duration immediately prior to the occurrence of the second process disturbance.

**Step 308:** At step 308, the historical data is analyzed to determine whether the cement manufacturing process was stabilized within a second time period. The second time period is a second time duration immediately following the occurrence of the second process disturbance.

**Step 310:** At step 310, the cement manufacturing process is controlled by implementing the plurality of historical operator actions. The implementation is based on the determination that the cement manufacturing process was stabilized within the second time period. This step thereby stabilizes the cement manufacturing process from the first process disturbance.

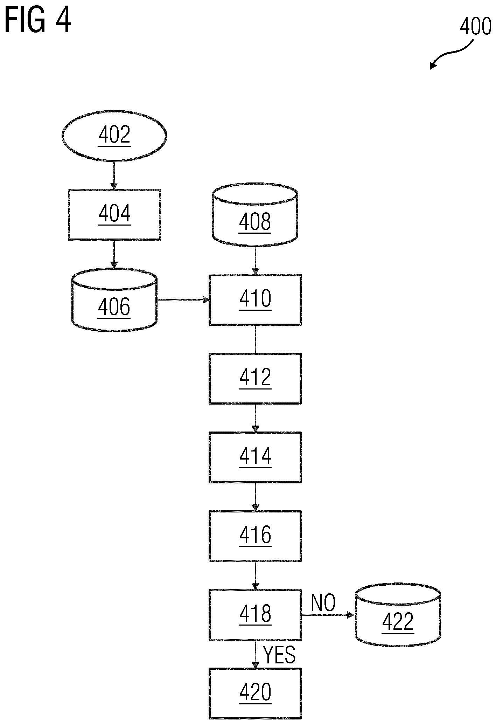

FIG. 4 is a process flowchart illustrating an exemplary use case of automated industrial process optimization of a cement manufacturing process, according to an embodiment of the present invention.

In FIG. 4, a process begins at step 402 with the initiation of an optimization procedure. The system 100 starts the process of monitoring and analyzing the cement manufacturing process. At step 404, data acquisition is performed. The processor 202 is configured to collect current values of various parameters from the cement manufacturing process and store them in the InfluxDB (406). The InfluxDB contains real-time data such as kiln 102 temperature, fuel feed rate, kiln inlet pressure, calciner head temperature, raw material composition, ID fan speed, and CO levels.

At step 406, the real-time data is stored in the InfluxDB (406), which serves as the repository for current values of the process parameters. The processor 202 is configured to ensure that the data is accurately captured and stored for further analysis. At step 408, historical data is retrieved from the digitized database (408). The digitized database contains historical data and past operator actions, including all changes made by operators in the control parameters to optimize the process. The processor 202 is configured to facilitate the retrieval of this historical data for comparison.

At step 410, the system 100 checks for similar process disturbances in the historical data. The processor 202 is configured to compare the plurality of current parameters stored in InfluxDB (406) with historical data in the digitized database (408) to identify similar patterns of process disturbances. At step 412, the processor 202 is further configured to identify the time T at which a similar process disturbance occurred in the past by analyzing the historical data. This step involves pinpointing past disturbances that exhibit deviations from operational thresholds in patterns quantitatively similar to the current disturbance.

At step 414, a backtrace from T to T-30 is performed. The processor 202 is configured to analyze the historical data for every similar process disturbance from time T to T-30. The analysis includes comparing every data point within this period with the user-configurable table (420) for permissible deviations. At step 416, the processor 202 is further configured to identify multiple similar process disturbances (e.g., similar process disturbance 1, similar process disturbance 2, etc.). These disturbances are characterized by patterns in historical data that match the current disturbance. The processor 202 is configured to ensure that every data point with a similar pattern is considered for comprehensive analysis.

At step 418, the processor 202 is configured to compare the current value of parameters with historical data from T-30 to T period, taking into account the allowed deviations specified in the user-configurable table (420). If the similarity match is greater than 90%, the system 100 proceeds to the next step. The user-configurable table (420) is used by operators to set priorities for various parameters such as kiln feed, calciner head temperature, free lime, alite, sintering zone temperature, kiln speed, pressure after preheater, and various burners. The table defines the production strategy and allowed deviations from current values for better optimization.

At step 422, the processor 202 is configured to store the similar process disturbances in the T-30 database if the similarity match exceeds 90%. The T-30 database contains historical data and past operator actions corresponding to similar disturbances. The processor 202 is configured to ensure that effective strategies are preserved for future reference.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Bezugszeichenliste

1. 1 **100** - System for automated industrial process optimization of a cement manufacturing process
2. **102** - Cement kiln
3. **104** - Sensors
4. **106** - Control system
5. **108** - Human Machine Interface (HMI)
6. **110** - Carbon Monoxide (CO) probe
7. **112** - Automation module
8. **202** - Processor/programmable logic controller (PLC)
9. **204** - Memory
10. **206** - Storage unit
11. **208** - Communication interface
12. **210** - Input-output unit
13. **212** - Network interface
14. **214** - Bus
15. **216** - Integrated Development Environment (IDE)
16. **300** - Process flowchart for automated industrial process optimization method
17. **302** - Step of detecting a first process disturbance
18. **304** - Step of comparing current parameters with historical data
19. **306** - Step of determining historical operator actions
20. **308** - Step of analyzing historical data for stabilization
21. **310** - Step of controlling the cement manufacturing process
22. **402** - Step of initiating an optimization procedure
23. **404** - Step of data acquisition
24. **406** - InfluxDB (database for real-time data storage)
25. **408** - Digitized database (for storing historical data)
26. **410** - Step of checking for similar process disturbances
27. **412** - Step of identifying the time T of past disturbances
28. **414** - Step of performing a backtrace from T to T-30
29. **416** - Step of identifying multiple similar process disturbances
30. **418** - Step of comparing current values with historical data
31. **420** - User-configurable table
32. **421** - Step of storing similar process disturbances in the T-30 database

## Claims

1. A method for automated industrial process optimization of a cement manufacturing process, based on historical operator actions, comprising:
detecting, by a processor (202), a first process disturbance in the cement manufacturing process by monitoring a plurality of current parameters of the cement manufacturing process, wherein the first process disturbance is a deviation of the plurality of current parameters from one or more operational thresholds;
comparing, by a processor (202), the plurality of current parameters with historical data to determine a second process disturbance that occurred in the past, wherein the second process disturbance exhibits a deviation from at least one operational threshold in a pattern quantitatively similar to the deviation of the first process disturbance;
determining, by a processor (202), a plurality of historical operator actions that occurred within a first time period, wherein the first time period is a first time duration immediately prior to the occurrence of the second process disturbance;
analyzing, by a processor (202), the historical data to determine whether the cement manufacturing process was stabilized within a second time period, wherein the second time period is a second time duration immediately following the occurrence of the second process disturbance; and
controlling, by a processor (202), the cement manufacturing process by implementing the plurality of historical operator actions based on the determination that the cement manufacturing process was stabilized within the second time period, thereby stabilizing the cement manufacturing process from the first process disturbance.

2. The method of claim 1, wherein controlling the cement manufacturing process comprises:
determining, by a processor (202), that the plurality of historical operator actions are mis-aligned with one or more criteria; and
halting, by a processor (202), the implementation of the plurality of historical operator actions based on the determination that the plurality of historical operator actions are mis-aligned.

3. The method of claim 1, wherein the plurality of current parameters are compared against historical data within a user-defined deviation range of parameters.

4. The method of claim 1, wherein the first process disturbance is detected based on a pattern similarity match between the plurality of current parameters and the historical data exceeding a certain threshold.

5. The method of claim 1, further comprising storing the plurality of historical operator actions and corresponding process parameters in a Digitized Database (408).

6. The method of claim 1, further comprising training one or more machine learning algorithms with the plurality of current parameters and the plurality of historical operator actions.

7. The method of claim 1, further comprising verifying an effectiveness of the plurality of implemented historical operator actions by monitoring a stability of the cement manufacturing process.

8. A system (100) for automated industrial process optimization of a cement manufacturing process, comprising:
one or more sensors (104) configured to monitor a plurality of current parameters of the cement manufacturing process;
a memory (204) configured to store historical data and historical operator actions;
a processor (202) configured to:
detect a first process disturbance in the cement manufacturing process by monitoring the plurality of current parameters, wherein the first process disturbance is a deviation of the plurality of current parameters from one or more operational thresholds;
compare the plurality of current parameters with historical data to determine a second process disturbance that occurred in the past, wherein the second process disturbance exhibits a deviation from at least one operational threshold in a pattern quantitatively similar to that of the first process disturbance;
determine a plurality of historical operator actions that occurred within a first time period, wherein the first time period is a first time duration immediately prior to the occurrence of the second process disturbance;
analyze the historical data to determine whether the cement manufacturing process was stabilized within a second time period, wherein the second time period is a second time duration immediately following the occurrence of the second process disturbance;
control the cement manufacturing process by implementing the plurality of historical operator actions based on the determination that the cement manufacturing process was stabilized within the second time period, thereby stabilizing the cement manufacturing process from the first process disturbance.

9. The system (100) of claim 8, wherein the processor (202) is further configured to determine that the plurality of historical operator actions are mis-aligned with one or more criteria, and to stop the implementation of the plurality of historical operator actions based on the determination that the plurality of historical operator actions are misaligned.

10. The system (100) of claim 8, wherein the processor (202) is further configured to compare the plurality of current parameters against historical data within a user-defined deviation range of parameters.

11. The system (100) of claim 8, wherein the processor (202) is further configured to detect the first process disturbance based on a pattern similarity match between the plurality of current parameters and the historical data exceeding a certain threshold.

12. The system (100) of claim 8, wherein the data storage unit is further configured to store the plurality of historical operator actions and corresponding process parameters in a Digitized Database (408).

13. The system (100) of claim 8, wherein the processor (202) is further configured to train one or more machine learning algorithms with the plurality of current parameters and the plurality of historical operator actions.

14. The system (100) of claim 8, wherein the processor (202) is further configured to verify an effectiveness of the plurality of implemented historical operator actions by monitoring a stability of the cement manufacturing process.

15. A computer-program product, having machine-readable instructions stored therein, that when executed by the processor (202), cause the processor (202) to perform a method according to any of the claims 1-7.
